# EUROPÄISCHE PATENTSCHRIFT

(11) **EP 0 986 495 B1**
(45) Veröffentlichungstag und Bekanntmachung des Hinweises auf die Patenterteilung: **01.06.2005**
(21) Anmeldenummer: 98965071.8
(22) Anmeldetag: 13.11.1998
(51) Int. Cl.: B60S 1/32

(54) **TRAGELEMENT FÜR EINE ZU EINEM WISCHBLATT FÜR SCHEIBEN VON KRAFTFAHRZEUGEN GEHÖRENDE WISCHLEISTE UND VERFAHREN ZU DESSEN HERSTELLUNG**
SUPPORTING ELEMENT FOR A WIPER BLADE BELONGING TO A WINDSCREEN WIPER IN A MOTOR VEHICLE
ELEMENT DE SUPPORT POUR UNE LAME FAISANT PARTIE D'UNE RACLETTE D'ESSUIE-GLACE POUR VEHICULES AUTOMOBILES, ET SON PROCEDE DE PRODUCTION

(30) Priorität: 26.03.1998 DE 19813230
(43) Veröffentlichungstag der Anmeldung: 22.03.2000
(73) Patentinhaber: ROBERT BOSCH GMBH, 70442 Stuttgart (DE)
(72) Erfinder: AICHELE, Wilfried, D-71364 Winnenden (DE); KIEFER, Martin, D-77704 Oberkirch (DE); KOTLARSKI, Thomas, D-77830 Bühlertal (DE)
(86) Internationale Anmeldenummer: PCT/DE1998/003338
(87) Internationale Veröffentlichungsnummer: WO 1999/048734

(56) Entgegenhaltungen:
- EP-A- 0 525 850
- WO-A-91/06451
- US-A- 3 925 844

## Beschreibung

### Stand der Technik

Tragelemente der im Oberbegriff des Anspruchs 1 bezeichneten Art sollen eine möglichst gleichmäßige Verteilung der von einem mit dem Tragelement verbundenen Wischerarm ausgehenden Anpreßkraft auf der Scheibe gewährleisten. Durch eine entsprechende Krümmung des unbelasteten Tragelements - also wenn das Wischblatt an der Scheibe anliegt - werden die Enden der im Betrieb des Wischblatts vollständig an der Scheibe angelegten Wischleiste durch das dann gespannte Tragelement zur Scheibe belastet, auch wenn sich die Krümmungsradien von sphärisch gekrümmten Fahrzeugscheiben bei jeder Wischblattposition ändern. Die Krümmung des Tragelements und damit des Wischblatts muß also etwas stärker sein als die im Wischfeld der zu wischenden Scheibe gemessene stärkste Krümmung. Das Tragelement ersetzt somit die aufwendige Tragbügelkonstruktion mit zwei in der Wischleiste angeordneten Federschienen, wie sie bei herkömmlichen Wischblättern praktiziert wird.

Die Erfindung geht aus von einem Tragelement nach der Gattung des Anspruchs 1. Ein bekanntes Tragelement dieser Art (EP 0 498 802 B1) weist ein langgestrecktes, im Querschnitt rechteckiges Kernstück aus Holz, Schaumstoff oder dgl. auf, damit die während des Wischbetriebs auf das Wischblatt einwirkenden Querkräfte ohne nachteilige Verformung des Wischblatts aufgenommen werden können. Weil das Kernstück rundum mit Faservließstreifen eingepackt werden muß, ist die Herstellung des Tragelements und damit des Wischblatts relativ aufwendig.

### Vorteile der Erfindung

Bei dem erfindungsgemäßen Wischblatt mit den kennzeichnenden Merkmalen des Anspruchs 1 ergibt sich eine wesentliche Vereinfachung der Tragelementherstellung und damit ein erheblich kostengünstigeres Wischblatt.

Eine gute Anpassung des Tragelements an die jeweiligen, an das Wischblatt gestellten Anforderungen wird erreicht, wenn das Tragelement aus mehreren übereinander geschichteten Fasermaterialstreifen aufgebaut ist.

Die beim Überstreichen von sphärisch gekrümmten Scheiben im Tragelement auftretenden Zug- und Druckspannungen werden besonders gut aufgenommen, wenn die Fasermaterialstreifen überwiegend in Streifenlängserstreckung orientierte Fasern aufweisen.

Auftretende Querkräfte, Torsionsmomente und Druckspannungen bleiben besonders dann ohne Einfluß auf die Wischqualität, wenn bestimmte Fasermaterialstreifen überwiegend Fasern aufweisen, die mit der Streifenlängserstreckung einen Winkel von weniger als 90° einschließen.

Da Zugspannungen überwiegend an der der Scheibe zugewandten Unterseite des Tragelements auftreten, weist ausgehend von der der Wischleiste zugewandten Unterseite des Tragelements wenigstens die erste Fasermaterialstreifenschicht überwiegend in Streifenlängserstreckung orientierte Fasern auf. Bei bestimmten Anwendungsfällen kann es von Vorteil sein, wenn an dieser Unterseite des Tragelements mehrere Fasermaterialstreifenschichten mit überwiegend in Streifenlängserstreckung orientierten Fasern übereinander geschichtet sind.

Auf der von der Scheibe abgewandten Oberseite des Tragelements treten vermehrt Querkräfte, Torsionsmomente und Druckspannungen auf, so daß mit Vorteil im Bereich dieser Oberseite Fasermaterialstreifenschichten angeordnet sind, deren Fasern überwiegend mit der Streifenlängserstreckung einen Winkel von weniger als 90° einschließen.

Bei einer ersten Ausführungsform der Erfindung sind die Fasermaterialstreifen an der Unterseite des Tragelements länger als die darüber liegenden und von Schicht zu Schicht kürzer werdenden Fasermaterialstreifen, so daß sich ein stabiles Mittelteil des Tragelements ergibt, an welchem eine Anschlußvorrichtung für einen das Wischblatt führenden Wischerarm befestigt werden kann. Weiter können sich dadurch auch Vorteile bei besonders stark gekrümmten Kraftfahrzeugscheiben ergeben.

Diese Vorteile können auch erreicht werden, wenn die Fasermaterialstreifen in ihrem Längsmittelabschnitt breiter sind als an ihren Endabschnitten.

Eine besonders kostengünstige Herstellung des Tragelements und damit des Wischblatts ergibt sich, wenn gemäß einer weiteren Ausführungsform der Erfindung die Fasermaterialstreifen an der Unterseite des Tragelements breiter sind als die darüberliegenden, von Schicht zu Schicht schmaler werdenden Fasermaterialstreifen. Bei einem derartigen Aufbau kann das Tragelement durch die Zusammenführung von endlosen Fasermaterialstreifen verschiedener Breite aufgebaut werden. Nach dem darauf erfolgenden Preßvorgang kann das dann geformte Tragelement in einer Abschneidestation vom Strang abgetrennt werden.

Die an das Tragelement gestellten Anforderungen werden besonders gut erfüllt, wenn zum Tränken der Fasermaterialstreifen ein duroplastisches Harz als Reaktionsgemisch gewählt wird.

Diesem Reaktionsgemisch können entsprechend den an das Tragelement gestellten Forderungen bestimmte Füllstoffe zugesetzt sein, welche die Eigenschaften des Tragelements in der gewünschten Weise verändern.

Gemäß einem Verfahren zum Herstellen eines mit dem Anspruch 1 beschriebenen Tragelements werden mehrere endlose Fasermaterialbänder zusammengeführt, mit einem Reaktionsgemisch getränkt und dann durch eine Düse geleitet, wobei danach der so gebildete, mehrschichtige und getränkte Fasermaterialstrang in einer Karusselanlage mit weiteren Fasermaterialbändern umwickelt und durch eine weitere Düse einer Heißpreßstation zugeführt wird, in welcher der Fasermaterialstrang in seiner Längsrichtung gebogen und im Querschnitt geformt, ausgehärtet und danach auf die für das Tragelement erforderliche Länge geschnitten wird. Ein nach diesem Verfahren hergestelltes Tragelement kann praktisch ohne Lohnkosten in automatisch arbeitenden Anlagen hergestellt werden. Es ist klar, daß dadurch die anfallenden Kosten weiter gesenkt werden können. Darüber hinaus kann die Karusselanlage bei entsprechender Steuerung der Umlaufgeschwindigkeiten und/oder der Strang-Vorschubgeschwindigkeit das Tragelement entsprechend den Forderungen fertigen, also beispielsweise so, daß der Faserverlauf an den Endabschnitten steiler zur Tragelementlängsachse liegt als im Mittelbereich des Tragelements.

Weitere, vorteilhafte Weiterbildungen mit Ausgestaltungen der Erfindung sind in der nachfolgenden Beschreibung eines in der Zeichnung dargestellten Ausführungsbeispiels des Tragelements und eines Herstellungsverfahrens für das Tragelement angegeben.

### Zeichnung

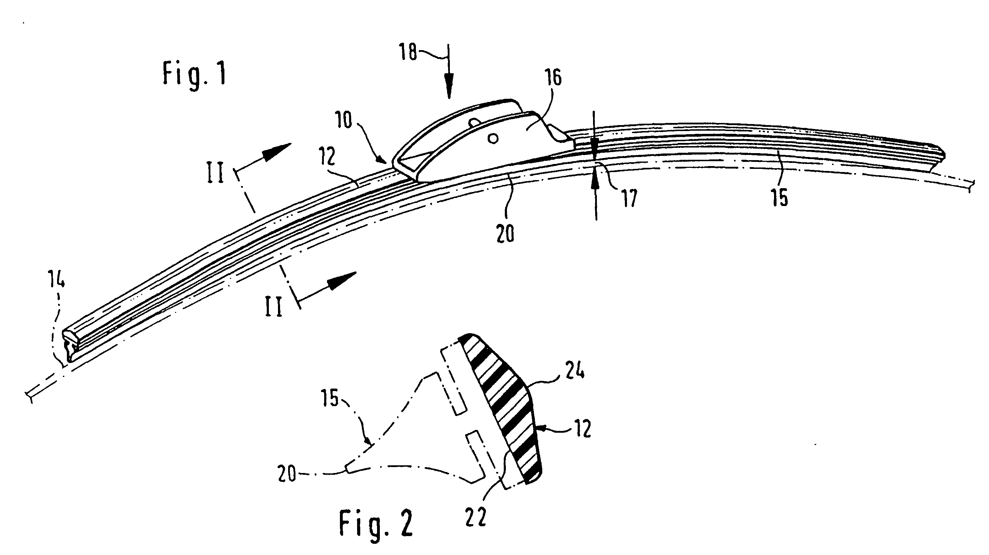

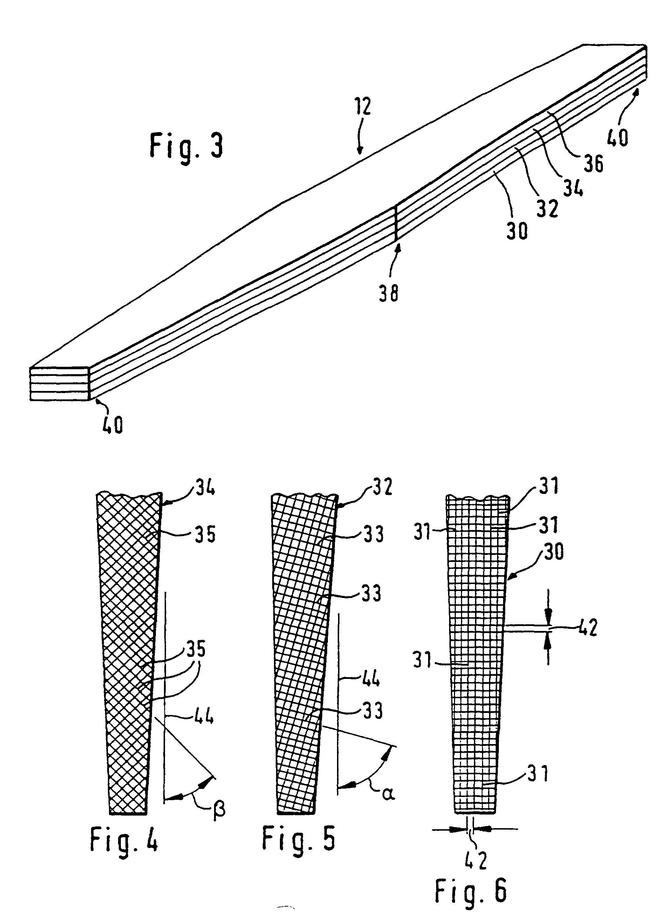

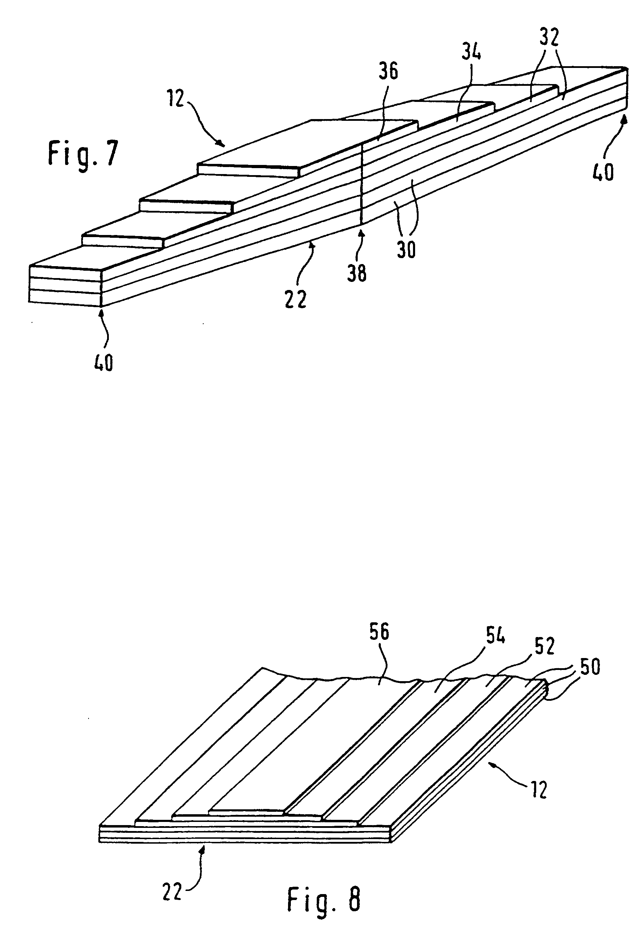

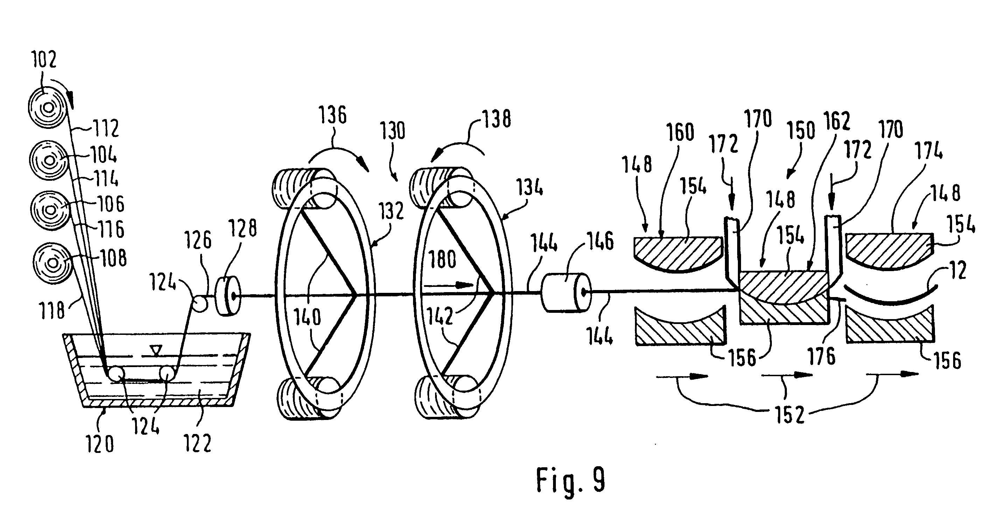

In der Zeichnung zeigen Figur 1 eine perspektivische Ansicht eines Wischblatts mit einem erfindungsgemäßen Tragelement, Figur 2 einen Schnitt durch das Tragelement gemäß Figur 1 entlang der Linie II-II mit strichpunktiert angedeuteter Wischleiste, Figur 3 eine perspektivische Prinzipdarstellung des Aufbaus eines Tragelements unmaßstäblich dargestellt, Figur 4 den vorwiegenden Faserverlauf eines bestimmten Fasermaterialstreifens, Figur 5 den Faserverlauf eines anderen Fasermaterialstreifens, Figur 6 den Faserverlauf eines weiteren Faserverlaufstreifens, Figur 7 eine perspektivische, unmaßstäbliche Prinzipdarstellung eines Tragelementaufbaus, Figur 8 eine Teildarstellung eines anders aufgebauten Tragelements und Figur 9 eine Prinzipdarstellung der Verfahrensschritte zum Herstellen eines erfindungsgemäßen Tragelements.

### Beschreibung der Ausführungsbeispiele

Ein in Figur 1 dargestelltes Wischblatt 10 weist ein bandartig langgestrecktes, federelastisches Tragelement 12 auf, an dessen der zu wischenden Scheibe 14 zugewandten Unterseite eine langgestreckte, gummielastische Wischleiste 15 längsachsenparallel befestigt ist. An der Oberseite des auch als Federschiene zu bezeichnenden Tragelements 12 ist in dessen Mittelabschnitt eine Anschlußvorrichtung 16 angeordnet, mit deren Hilfe das Wischblatt 10 mit einem nicht dargestellten, angetriebenen Wischerarm gelenkig und lösbar verbunden werden kann. Der Wischerarm und damit auch das Wischblatt 10 sind zur Scheibe 14 hin belastet (Pfeil 18). Die sphärisch gekrümmte Scheibe 14 ist in Figur 1 strichpunktiert dargestellt. Die dort gezeigte Krümmung soll die stärkste Krümmung der Scheibe zeigen. Aus Figur 1 ist klar ersichtlich, daß die Krümmung des Wischblatts 10 bzw. des Tragelements 12 stärker ist als die maximale Scheibenkrümmung. Dies wird durch den bei einem unbelasteten Wischerblatt - welches lediglich mit den Enden seiner Wischleiste 15 an der Scheibe 14 angelegt wird - zwischen Scheibe 14 und Wischleiste 15 verbleibenden Spalt 17 deutlich. Unter der Anpreßkraft (Pfeil 18) legt sich das Wischblatt 10 mit seiner Wischlippe 20 der Wischleiste 15 über seine gesamte Länge an der Scheibenoberfläche an. Dabei baut sich im federelastischen Tragelement 12 eine Spannung auf, welche für eine ordnungsgemäße Anlage der Wischleiste 15 bzw. deren Wischlippe 20 über die gesamte Länge der Wischleiste an der Scheibe 14 sorgt. Das Tragelement 12 ist aus mehreren Schichten von mit einem Reaktionsgemisch getränkten Fasermaterial hergestellt. In Figur 2 ist dieser Schichtaufbau nicht gezeigt. Der prinzipielle Aufbau des Tragelements ist aus Figur 3 ersichtlich. Wie diese Figur zeigt, sind mehrere Fasermaterialstreifen 30 bis 36 übereinander geschichtet. Alle Streifen sind in ihrem Mittelbereich 38 breiter als an ihren Endbereichen 40. Entsprechend den während des Wischbetriebs auf das Tragelement 12 einwirkenden Kräfte können sich die Fasermaterialstreifen hinsichtlich des Faserverlaufs voneinander unterscheiden. Da im Bereich der der Scheibe 14 zugewandten Unterseite 22 (Figur 2) des Tragelements 12 während des Wischbetriebs überwiegend wechselnde Zugspannungen auftreten - diese sind in den stetig wechselnden Krümmungsradien der Scheibe zu sehen - empfiehlt es sich, mehrere Fasermaterialstreifen 30 zu schichten und darauf zu achten, daß deren Fasern 31 überwiegend in der Streifenlängserstreckung 44 orientiert sind. Dabei ist es von Vorteil, wenn die Faserabstände 42 entsprechend der Größe der auftretenden Belastung gewählt wird. Zum weiteren Aufbau des Tragelements werden an dessen Oberseite 24 (Figur 2) Fasermaterialstreifen verwendet, wie sie in den Figuren 4 und 5 gezeigt sind. Bei diesen Fasermaterialstreifen 32 und 34 sind die Fasern 33 und 35 überwiegend so orientiert, daß sie mit der Streifenlängserstreckung 44 einen Winkel α bzw. β von weniger als 90° einschließen. Durch eine solche Anordnung der Fasern können die auf das Tragelement während des Wischbetriebs einwirkenden Normal- und Schubspannungen besonders gut aufgenommen werden. Die in Figur 3 mit 36 bezeichnete vierte Fasermaterialschicht kann den Forderungen entsprechend beliebig aus den Fasermaterialstreifen 30 bzw. 32 bzw. 34 ausgewählt werden. Zu bemerken ist, daß die Fasermaterialstreifenschichten 30, 32, 34 und 36 nicht aus einem einzigen Streifen gebildet sein müssen, sondern daß durchaus jeder Fasermaterialstreifen durch Schichtung von mehreren gleichartigen Einzelstreifen aufgebaut werden kann. Auch kann die Anzahl der Schichten von der in Figur 3 dargestellen Schichtenzahl abweichen, was naturgemäß auch für die mit den Figuren 7 und 8 gezeigten Schichtungen gilt.

Ein etwas praxisnäherer, das Prinzip einer ersten Ausführungsform des Tragelements zeigender Aufbau ist in Figur 7 dargestellt. Unter Berücksichtigung der oben erläuterten besonderen Ausgestaltungen der Fasermaterialstreifen bzw. Schichten 30, 32 und 34 zeigt, daß die Fasermaterialstreifen 30 im Bereich der Unterseite 22 des Tragelements 12 länger sind als die darüber liegenden und von zu Schicht 32 bis 36 kürzer werdenden Fasermaterialstreifen. Dadurch wird das Tragelement in seiner Dicke zu den Enden hin schlanker und elastischer, so daß auch relativ enge Scheibenradien ordnungsgemäß gereinigt werden können. Die Anordnung der verschieden langen Fasermaterialstreifen ist so getroffen, daß im Bereich der Tragelementunterseite 22 die längsten Fasermaterialstreifen z.B. Fasermaterialstreifen gemäß der Bezugszahl 30 Verwendung finden. Der weitere Aufbau kann dann so erfolgen, daß die kürzeren Fasermaterialstreifen 32, 34, 36 mittig auf den Fasermaterialstreifen 30 angeordnet werden. Dies ist jedoch aber nicht zwingend notwendig. Es ist auch denkbar, den Aufbau der kürzeren Schichten in Längsrichtung außermittig zu den Fasermaterialstreifen 30 vorzunehmen. Auch bei dieser Ausführungsform gilt, daß die einzelnen Schichten 30, 32, 34, 36 nicht durch ein einziges Fasermaterialband gebildet sein müssen, sondern daß dazu auch mehrere Fasermaterialbänder verwendet werden können. Weiter kann es von Vorteil sein, wenn die Breite der Fasermaterialstreifen ausgehend von der Unterseite 22 des Tragelements 12 zur Oberseite 24 des Tragelements und/oder vom Mittelbereich zu den Endbereichen hin schmaler werden.

Bei einer anderen Ausführungsform, die in Figur 8 dargestellt ist, sind die Fasermaterialstreifen 50 bis 56 an der Unterseite 22 des Tragelements 12 breiter als die darüberliegenden und von Schicht zu Schicht schmaler werdenden Fasermaterialstreifen. Die einzelnen Fasermaterialstreifen können so praktisch endlos zusammengeführt und nach weiteren Bearbeitungsschritten auf Länge geschnitten werden. Bei einer solchen Schichtung entfällt der etwas aufwendigere Aufbau des Tragelements, mit Fasermaterialstreifen verschiedener Länge. Abweichend von der Darstellung gemäß Figur 8 ist es durchaus denkbar, die Schichtung der Fasermaterialstreifen 50 bis 56 so vorzunehmen, daß die Längsmittelachse des Fasermaterialstreifens 56 neben der Längsmittelachse des Fasermaterialstreifens 50 liegt. Auch hier gilt, daß mehrere Streifen zu Schichten zusammengefaßt werden können.

Um den Tragelementen gemäß den Figuren 7 und 8 die erforderliche Festigkeit zu geben, sind die aus Einzelfaser bestehenden z.B. durch Verweben oder dergl. gebildeten Fasermaterialstreifen 30 bis 36 bzw. 50 bis 56 vor dem Zusammenfügen mit einem Reaktionsgemisch getränkt, das ein duroplastisches Harz ist. Zur Verbesserung der Eigenschaften des Reaktionsgemischs im Hinblick auf die vom Tragelement zu erfüllende Aufgabe kann es von Vorteil, wenn diesem Füllstoffe zugesetzt sind. Als Fasermaterial können Glasfasern, Kohlefasern, Mineralfasern, Aramidfasern und andere verwendet werden. Als Reaktionsgemisch eignen sich besonders Polyesterharze, Phenolharze, Epoxidharze und andere. Allen Ausführungsbeispielen ist gemeinsam, daß das Tragelement vollständig aus dem mit Reaktionsgemisch getränkten Fasermaterial hergestellt sind. Wenn die geschichteten Streifenpakete bzw. Streifenbänder gemäß den Figuren 7 und 8 formgepreßt sind, verschwindet der Stufenaufbau und es ergibt sich ein Tragelement, dessen Außenkonturen stufenlos sind. Vergleiche dazu Figuren 1 und 2.

Im folgenden soll anhand von Figur 9 das Prinzip eines Herstellungsverfahrens für ein anderes aufgebautes, erfindungsgemäßes Tragelement erläutert werden. Demnach werden von Vorratsrollen 102 bis 108 praktisch endlos vorgefertigte Fasermaterialstränge 112 bis 118 abgewickelt und zusammen durch ein Bad 120 mit Reaktionsgemisch 122 geführt. Zur Führung dienen mehrere Umlenkrollen 124. Der so gebildete Ausgangs- oder Kernstrang 126 wird durch eine erste Düse 128 geleitet, an welcher das überflüssige Reaktionsgemisch abgestreift und die Stränge 112 bis 118 so gegeneinander gedrückt werden, daß eine gewisse Haftung des Kernstrangs 126 erreicht wird. Danach wird der Kernstrang 126 zu einer sogenannten Karusselanlage 130 geführt, die beim dargestellten Ausführungsbeispiel zwei Wickelvorrichtungen 132, 134 aufweist. Jede dieser Wickelvorrichtungen 132 und 134 läuft in Richtung der Pfeile 136 bzw. 138 um und bringt auf den Kernstrang 126 weitere Hilfsstränge 140 bzw. 142 auf, so daß sich ein Fertigstrang 144 ergibt, der die Karusselanlage 130 verläßt. Dieser Fertigstrang 144 durchdringt eine weitere Düse 146, in welcher eine innige Verbindung des Kernstrangs 126 und der Hilfsstränge 140, 142 erreicht wird. Nach dem Verlassen der Düse 146 gelangt der Fertigstrang 144 in eine eine Vielzahl von Preßwerkzeuge 148 aufweisende Heißpreßstation 150, welche entsprechend dem Fortschritt des von der Düse 146 kommenden Fertigstrangs 144 in Richtung der Pfeile 152 wandern. Während dieser Wanderbewegung 152 werden die Hälften 154, 156 der verschiedenen Preßwerkzeuge 148 geöffnet (Position 160), so daß der Fertigstrang 144 in diese Form eintreten kann. Unter Ausführung der Wanderbewegung (Pfeil 152) wird das Preßwerkzeug 148 geschlossen, wobei der Fertigstrang 144 in seiner Längsrichtung gebogen und im Querschnitt geformt wird (Position 162). Gleichzeitig erfolgt eine gewisse Aushärtung des nun gebogenen Fertigstrangs 144 und eine Schneidevorrichtung schneidet den gebogenen Fertigstrang 144 auf die für das Tragelement 12 erforderliche Menge, indem Schneidemesser 170 in Richtung der Pfeile 172 bewegt werden. Nach dem Öffnen der Formhälften 154, 156 (Position 174) kann das fertig gepreßte Tragelement 12 entnommen werden. Möglicherweise entstehende Scherabfälle 176 verlassen die Preßstation 150.

Ein derartiges Fertigungsverfahren ist besonders wirtschaftlich und kostengünstig. Darüber hinaus kann durch die Verwendung einer mehrstufigen Karusselanlage 130 durch Verändern der Umlaufgeschwindigkeit der einzelnen Karusselstationen und/oder durch die Veränderung der Vorschubgeschwindigkeit (Pfeil 180) des Kernstrangs 126 der Verlauf der Fasern im Fertigstrang 144 bzw. im Tragelement 12 so beeinflußt werden, daß in den verschieden beanspruchten Bereichen des Tragelements 12 unterschiedliche Faserverlaufsrichtungen ausgebildet werden.

## Patentansprüche

1. Tragelement für eine zu einem Wischblatt (10) für Scheiben von Kraftfahrzeugen gehörende Wischleiste (14) aus gummielastischem Material, die längsachsenparallel an der der Scheibe (14) zugewandten Unterseite (22) des langgestreckten, federelastischen Tragelements (12) befestigt ist, **dadurch gekennzeichnet, daß** das Tragelement (12) vollständig unter Verwendung von verwobenem mit einem Reaktionsgemisch getränkten Fasermaterial oder von verwobenem und umwickeltem, mit dem Reaktionsgemisch getränkten Fasermaterial hergestellt ist, wobei das Tragelement (12) aus mehreren übereinander geschichteten Fasermaterialstreifen (30, 32, 34, 36) aufgebaut ist und wobei die Fasermaterialstreifen (30) überwiegend in Streifenlängserstreckung (44) orientierte Fasern (31) aufweisen.

2. Tragelement nach Anspruch 1, **dadurch gekennzeichnet, daß** die Fasermaterialstreifen (32 bzw. 34) überwiegend Fasern (33 bzw. 35) aufweisen, die mit der Streifenlängserstreckung (44) einen Winkel (α bzw. β) von weniger als 90° einschließen.

3. Tragelement nach einem der Ansprüche 1 oder 2, **dadurch gekennzeichnet, daß** ausgehend von der der Wischleiste (15) zugewandten Unterseite.(22) des Tragelements (12) wenigstens die erste Fasermaterialstreifenschicht (30) überwiegend in Streifenlängserstreckung (44) ausgerichtete Fasern (31) aufweist.

4. Tragelement nach Anspruch 3, **dadurch gekennzeichnet, daß** auf der von der Unterseite (22) abgewandten Seite dieser Fasermaterialstreifenschicht (30) weitere Fasermaterialstreifenschichten (32, 34, 36) aufgebracht sind, deren Fasern überwiegend mit der Streifenlängserstreckung (44) einen Winkel (α bzw. β) von weniger als 90° einschließen.

5. Tragelement nach einem der Ansprüche 1 bis 4, **dadurch gekennzeichnet, daß** die Fasermaterialstreifen (30) an der Unterseite (22) des Tragelements (12) länger sind als die darüberliegenden, von Schicht (32) zu Schicht (34, 36) kürzer werdenden Fasermaterialstreifen.

6. Tragelement nach Anspruch 5, **dadurch gekennzeichnet, daß** die Fasermaterialstreifen (30 bis 36) in ihrem Mittenabschnitt (38) breiter sind als an ihren Endabschnitten (40).

7. Tragelement nach einem der Ansprüche 1 bis 4, **dadurch gekennzeichnet, daß** die Fasermaterialstreifen (50, 52, 54, 56) an der Unterseite (22) des Tragelements (12) breiter sind als die darüberliegenden, von Schicht zu Schicht schmaler werdenden Fasermaterialstreifen.

8. Tragelement nach einem der Ansprüche 1 bis 7, **dadurch gekennzeichnet, daß** das Reaktionsgemisch ein duroplastisches Harz ist.

9. Tragelement nach Anspruch 8, **dadurch gekennzeichnet, daß** dem Reaktionsgemisch Füllstoffe zugesetzt sind.

10. Verfahren zum Herstellen eines unter Verwendung von verwobenem Fasermaterial hergestellten, federelastischen Tragelements (12) gemäß Anspruch 1, **dadurch gekennzeichnet, daß** mehrere endlose Fasermaterialbänder (112, 114, 116, 118) zusammengeführt mit einem Reaktionsgemisch (122) getränkt und danach durch eine Düse (128) geleitet werden, daß der so gebildete, mehrschichtige und getränkte Fasermaterialkernstrang (126) in einer Karusselanlage (130) mit weiteren Fasermaterialhilfssträngen (140, 142) umwickelt und der so gebildete Fertigstrang (144) durch eine weitere Düse (146) einer Heißpreßstation (150) zugeführt wird, in welcher der fertige Fasermaterialstrang (144) in seiner Längsrichtung gebogen, im Querschnitt geformt, gehärtet und danach auf die für das Tragelement (12) erforderliche Länge geschnitten wird.

## Claims

1. Supporting element for a wiper strip (14) belonging to a wiper blade (10) for windows of motor vehicles and consisting of rubber-elastic material, the said wiper strip being fastened to the lower side (22), facing the window (14), of the elongate, spring-elastic supporting element (12) in a manner parallel to the longitudinal axis, **characterized in that** the supporting element (12) is produced entirely using woven fibre material impregnated with a reaction mixture or woven and covered fibre material impregnated with the reaction mixture, the supporting element (12) being constructed from a plurality of fibre material strips (30, 32, 34, 36) layered one above another, and the fibre material strips (30) having fibres (31) oriented predominantly in the strip longitudinal extent (44).

2. Supporting element according to Claim 1, **characterized in that** the fibre material strips (32 or 34) predominantly have fibres (33 or 35) which enclose an angle (α or β) of less than 90° with the strip longitudinal extent (44).

3. Supporting element according to either of Claims 1 and 2, **characterized in that**, starting from the lower side (22), facing the wiper strip (15), of the supporting element (12), at least the first fibre-material-strip layer (30) predominantly has fibres (31) oriented in the strip longitudinal extent (44).

4. Supporting element according to Claim 3, **characterized in that** further fibre-material-strip layers (32, 34, 36) are deposited on that side of this fibre-material-strip layer (30) which faces away from the lower side (22), the fibres of which fibre-material-strip layers predominantly enclose an angle (α or β) of less than 90° with the strip longitudinal extent (44).

5. Supporting element according to one of Claims 1 to 4, **characterized in that** the fibre material strips (30) on the lower side (22) of the supporting element (12) are longer than the fibre material strips which are situated above it and become shorter from layer (32) to layer (34, 36).

6. Supporting element according to Claim 5, **characterized in that** the fibre material strips (30 to 36) are wider in their central section (38) than on their end sections (40).

7. Supporting element according to one of Claims 1 to 4, **characterized in that** the fibre material strips (50, 52, 54, 56) on the lower side (22) of the supporting element (12) are wider than the fibre material strips which are situated above it and become narrower from layer to layer.

8. Supporting element according to one of Claims 1 to 7, **characterized in that** the reaction mixture is a duroplastic resin.

9. Supporting element according to Claim 8, **characterized in that** fillers are added to the reaction mixture.

10. Method for producing a spring-elastic supporting element (12) according to Claim 1 that is produced using woven fibre material, **characterized in that** a plurality of endless fibre material bands (112, 114, 116, 118) are brought together, impregnated with a reaction mixture (122) and then conducted through a nozzle (128), **in that** the multilayer and impregnated fibre-material-core strand (126) formed in this manner is covered with further fibre-material-auxiliary strands (140, 142) in a carousel system (130) and the finished strand (144) formed in this manner is supplied through a further nozzle (146) to a hot pressing station (150) in which the finished fibre material strand (144) is bent in its longitudinal direction, shaped in cross section, cured and then cut to the length required for the supporting element (12).

## Revendications

1. Élément de support pour une lame d'essuie-glace (15), en matériau élastique, qui fait partie d'une raclette d'essuie-glace (10) destinée à des vitres de véhicule automobile et qui parallèlement à l'axe longitudinal est fixée au côté inférieur (22) - orienté vers la vitre ( 14) - de l'élément de support (12) élastique et allongé,
**caractérisé en ce que**
l'élément de support (12) est entièrement fabriqué en utilisant un matériau en fibres entrelacé et imprégné d'un mélange réactionnel ou un matériau en fibres entrelacé et entortillé et imprégné du mélange réactionnel, l'élément de support (12) étant constitué de plusieurs bandes de matériau en fibres (30, 32, 34, 36) en couches superposées et les bandes de matériau en fibres (30) présentant des fibres (31) en grande partie orientées dans le sens de la longueur des bandes (44).

2. Élément de support selon la revendication 1,
**caractérisé en ce que**
les bandes de matériau en fibres (32 ou 34) présentent surtout des fibres (33 ou 35) qui font un angle (α ou β) inférieur à 90° par rapport au sens de la longueur des bandes (44).

3. Élément de support selon l'une des revendications 1 ou 2,
**caractérisé en ce que**
en partant du côté inférieur (22) - orienté vers la lame d'essuie-glace (15) - de l'élément de support (12), au moins la première couche de bandes de matériau en fibres (30) présente des fibres (31) en grande partie orientées dans le sens de la longueur des bandes (44).

4. Élément de support selon la revendication 3,
**caractérisé en ce que**
sur le côté - détourné du côté inférieur (22) - de cette couche de bande de matériau en fibres (30), on applique d'autres couches de bandes de matériau en fibres (32, 34, 36) dont les fibres font pour la plupart un angle (α ou β) inférieur à 90° par rapport au sens de la longueur des bandes (44).

5. Elément de support selon l'une des revendications 1 à 4,
**caractérisé en ce que**
sur le côté inférieur (22) de l'élément de support (12), les bandes de matériau en fibres (30) sont plus longues que les bandes de matériau en fibres placées par dessus et qui raccourcissent de couche (32) en couche (34, 36).

6. Élément de support selon la revendication 5,
**caractérisé en ce que**
les bandes de matériau en fibres (30 à 36) sont plus larges dans leur portion centrale (38) que dans leurs portions terminales (40).

7. Élément de support selon l'une des revendications 1 à 4,
**caractérisé en ce que**
sur le côté inférieur (22) de l'élément de support (12), les bandes de matériau en fibres (50, 52, 54, 56) sont plus larges que les bandes de matériau en fibres placées par dessus et qui deviennent plus étroites de couche en couche.

8. Élément de support selon l'une des revendications 1 à 7,
**caractérisé en ce que**
le mélange réactionnel est une résine thermodurcissable.

9. Élément de support selon la revendication 8,
**caractérisé en ce que**
des matières de remplissage sont ajoutées au mélange réactionnel.

10. Procédé pour fabriquer un élément de support (12) élastique fabriqué en utilisant un matériau en fibres entrelacé d'après la revendication 1,
**caractérisé en ce que**
plusieurs bandes sans fin de matériau en fibres (112, 114, 116, 118) rassemblées sont imprégnées d'un mélange réactionnel (122) et sont ensuite conduites à travers une buse (128) de telle manière que le cordon de matériau en fibres (126) multicouches ainsi formé et imprégné est entortillé à d'autres cordons auxiliaires de matériau en fibres (140, 142) dans une installation de carrousel (130), et le cordon fini (144) ainsi formé est conduit par une autre buse (146) à un poste de pressage à chaud (150) dans lequel le cordon de matériau en fibres (144) fini est courbé dans son sens longitudinal, façonné en section transversale, durci puis coupé à la longueur nécessaire pour l'élément de support (12).
